# FASCICULE DE BREVET EUROPEEN

(11) **EP 0 585 187 B1**
(45) Date de publication et mention de la délivrance du brevet: **19.11.1997**
(21) Numéro de dépôt: 93420348.0
(22) Date de dépôt: 24.08.1993
(51) Int. Cl.: H04N 5/68

(54) **Circuit et procédé de détection de tube chaud**
Schaltungsanordnung und Methode zur Erkennung einer heissen Röhre
Circuit and method for hot tube detection

(30) Priorité: 27.08.1992 FR 9210502
(43) Date de publication de la demande: 02.03.1994
(73) Titulaire: SGS-THOMSON MICROELECTRONICS S.A., 94250 Gentilly (FR)
(72) Inventeur: Mazet, Roland, F-38000 Grenoble (FR)
(74) Mandataire: de Beaumont, Michel

(56) Documents cités:
- EP-A- 0 492 574
- GB-A- 2 159 025
- US-A- 4 450 476
- PATENT ABSTRACTS OF JAPAN vol. 9, no. 136 (E-320)12 Juin 1986 & JP-A-60 018 086 (TOSHIBA K.K.) 30 Janvier 1985

## Description

La présente invention concerne les circuits de commande de tubes cathodiques de téléviseurs, et en particulier un circuit permettant d'indiquer que le tube a atteint un niveau de préchauffage suffisant lors de la mise sous tension du téléviseur.

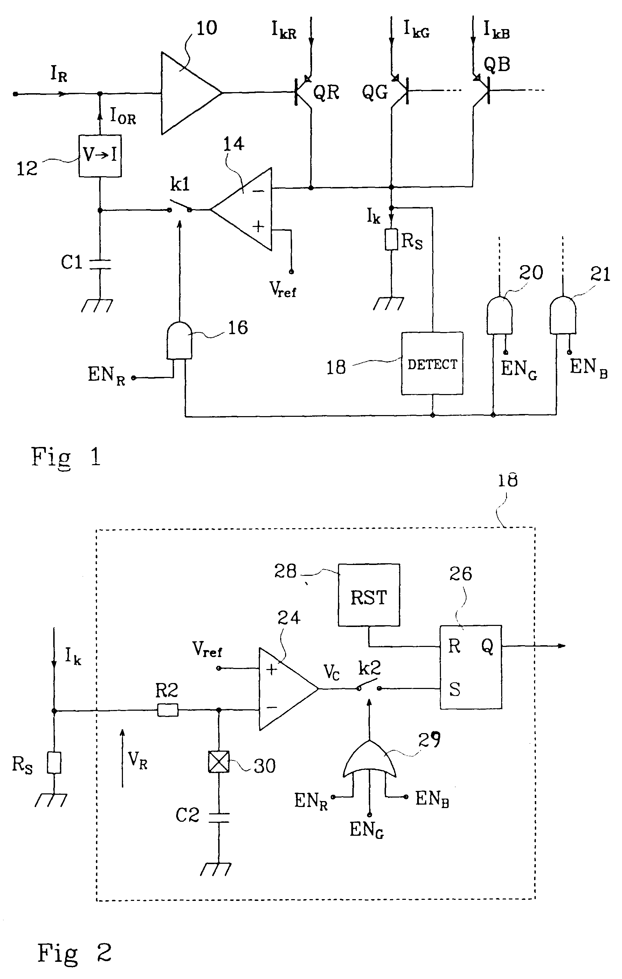

La figure 1 représente schématiquement un étage de commande de l'une des trois cathodes d'un tube couleur, par exemple la cathode rouge (R). Ce circuit comprend un transistor PNP QR dont l'émetteur est relié à la cathode rouge (non représentée) et dont le collecteur est relié à la masse par l'intermédiaire d'une résistance shunt Rs. La base du transistor QR est commandée par un amplificateur 10 recevant en entrée un courant I_{R} en tant que signal de la voie rouge et un courant constant I_{OR} de correction de niveau de noir. Le courant de correction I_{OR} est fourni par un convertisseur tension-courant 12 dont la tension d'entrée est prise aux bornes d'une capacité C1. La tension aux bornes de la capacité C1 est fixée par un amplificateur différentiel 14 recevant sur une entrée une tension de référence Vref et sur une autre entrée la tension aux bornes de la résistance Rs, qui est indicative du courant de cathode I_{K}.

Les éléments 12, C1 et 14 constituent une boucle de régulation, dite boucle de régulation du niveau du noir. Cette boucle a pour but de réajuster périodiquement le signal de correction I_{OR} pour faire correspondre le niveau du noir du signal d'entrée I_{R} au niveau du noir de la cathode correspondante.

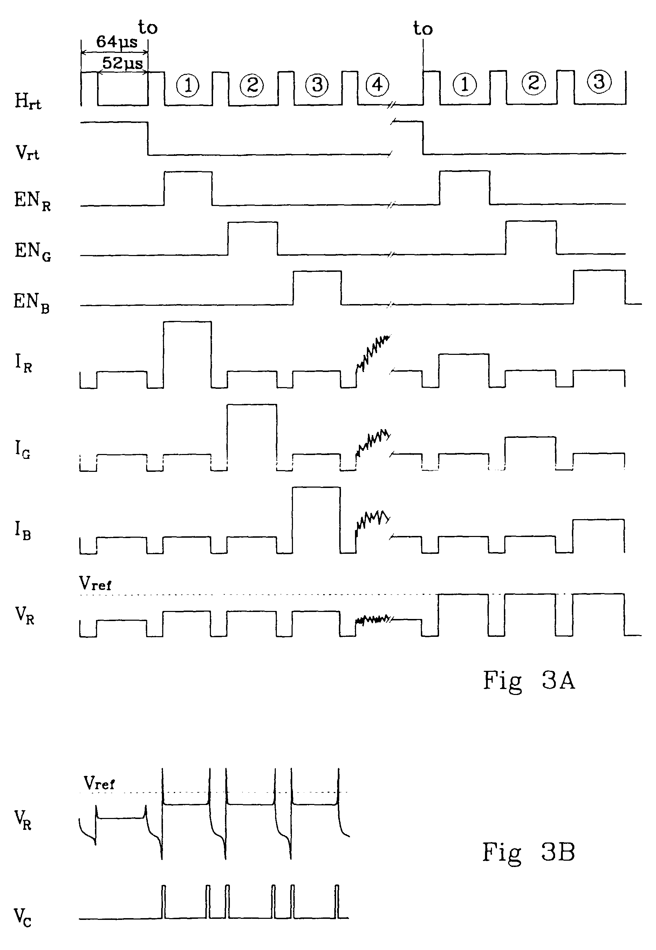

La boucle de régulation du niveau du noir est activée, comme on le verra plus en détail en relation avec la figure 3A, pendant la durée d'une ligne à chaque début de trame et désactivée pendant tout le reste de la trame. Cette courte phase de régulation permet de stocker dans la capacité C1 une tension de correction, convertie en le courant de correction I_{OR}, servant pendant le reste de la trame. La possibilité d'activation et de désactivation de la boucle est symbolisée par un interrupteur k1 disposé entre la capacité C1 et l'amplificateur 14. La boucle de régulation est activée par un signal EN_{R} qui est filtré par une porte ET 16 de sorte que la boucle de régulation ne puisse être activée qu'après une phase de préchauffage du tube. La fin de la phase de préchauffage est déterminée par un circuit de détection de tube chaud 18 mesurant le courant de cathode I_{K}. La sortie du circuit 18 est reliée à une entrée de la porte ET 16.

Des circuits similaires à ceux que l'on vient de décrire sont associés à un transistor QG de commande de cathode verte et à un transistor QB de commande de cathode bleue. Les boucles de régulation associées à la cathode verte et à la cathode bleue sont validées par des signaux respectifs EN_{G} et EN_{B} fournis à des entrées de portes ET 20 et 21. La même résistance Rs sert à mesurer la somme des trois courants de cathode I_{KR}, I_{KG} et I_{KB}. De même, le seul circuit de détection 18 sert à déterminer la fin de la phase de préchauffage et à permettre la transmission des signaux de validation EN_{R}, EN_{G} et EN_{B}.

La figure 2 représente schématiquement une architecture classique de circuit 18 de détection de tube chaud. La tension aux bornes de la résitance Rs alimente l'une des entrées d'un comparateur 24, l'autre entrée recevant la tension de référence Vref. La sortie Vc du comparateur 24 est appliquée à l'entrée S de mise à 1 d'une bascule 26 de type RS. L'entrée R de mise à zéro de la bascule 26 est reliée à un circuit de mise à zéro à la mise sous tension (RST) 28. La sortie Vc du comparateur 24 n'est transmise à la bascule 26 que pendant chacune des trois phases de régulation du niveau du noir, c'est-à-dire lors de l'activation de chacun des signaux EN_{R}, EN_{G} et EN_{B}, ce qui est représenté par un interrupteur K2 disposé entre la sortie de l'amplificateur 24 et la bascule 26, commandé par une porte OU 29 recevant en entrée les signaux EN_{R}, EN_{G} et EN_{B}. On comprendra ultérieurement le rôle d'un filtre passe-bas à résistance R2 et capacité C2, disposé entre la résistance shunt Rs et l'entrée du comparateur 24.

La figure 3A représente les allures de différents signaux lors d'une phase de préchauffage du tube et lors d'une phase normale. Un signal Hrt est sous la forme d'impulsions correspondant à des retours de ligne et un signal Vrt est sous la forme d'impulsions longues correspondant à des retours de trame. On a représenté en correspondance avec ces signaux Hrt et Vrt les signaux de validation de boucle de régulation EN_{R}, EN_{G} et EN_{B}, les signaux I_{R}, I_{G} et I_{B} d'entrée des trois circuits de commande de cathode, et la tension V_{R} apparaissant aux bornes de la résistance shunt Rs.

Les impulsions du signal Hrt se succèdent à une période de 64 microsecondes. Les impulsions sont séparées par des intervalles de 52 microsecondes correspondant à des intervalles de ligne. Les intervalles de ligne sont numérotés 1, 2, 3... au niveau du signal Hrt. Une première série d'intervalles 1, 2, 3... à la partie gauche de la figure correspond à une phase de préchauffage du tube, et une deuxième série 1, 2, 3... à la partie droite correspond à une phase normale. Les signaux Hrt, Vrt, EN_{R}, EN_{G} et EN_{B} restent identiques dans les phases de préchauffage et normale.

Un instant t₀ correspond à un début de retour ligne et à un début de trame. Le signal de retour trame Vrt passe d'un état haut à un état bas et reste à l'état bas pendant toute la durée de la trame. Les signaux EN_{R}, EN_{G} et EN_{B} passent chacun à un état actif respectivement aux intervalles de ligne 1, 2 et 3, et restent inactifs jusqu'au prochain début de trame.

Pendant une phase de préchauffage, fage, les signaux EN (EN_{R}, EN_{G} et EN_{B}) définissent des fenêtres de mesure dans lesquelles on vérifie si le courant de cathode I_{K} atteint un niveau suffisant. Pendant une phase normale, ces signaux définissent des fenêtres pendant lesquelles s'effectuent les régulations du niveau du noir pour chacun des canaux rouge, vert et bleu.

Les signaux I (I_{R},I_{G} et I_{B}) fournis aux circuits de commande de cathode présentent une impulsion de niveau bas pendant les retours de ligne et sont à un niveau constant pendant les retours de trame. A partir de l'intervalle de ligne 4, les signaux I présentent des variations correspondant à l'image à reproduire sur l'écran. Ces variations sont imperceptibles sur l'écran tant que le tube n'a pas atteint son régime de fonctionnement nominal.

Lors d'une phase de préchauffage, comme cela est représenté à la partie gauche de la figure 3A, les signaux I présentent un niveau relativement élevé pendant les fenêtres correspondantes des signaux EN, ce qui a pour but d'activer rapidement le tube. Le courant de cathode croît progressivement par paliers pendant les intervalles de ligne 1, 2 et 3. A un instant antérieur au début de trame de la partie droite de la figure 3A, le courant de cathode atteint le niveau du noir correspondant à une tension de valeur Vref aux bornes de la résistance Rs. A cet instant, le signal de sortie Vc du comparateur 24 (figure 2) passe à l'état haut et est transmis, puisque l'on est dans une fenêtre de mesure EN, à l'entrée de mise à un S de la bascule 26. Alors, la bascule 26 autorise la validation des boucles de régulation du niveau du noir lors des fenêtres EN à venir.

Dans la partie droite de la figure 3A (phase normale), les signaux I présentent chacun, lors d'une fenêtre EN correspondante, un niveau de référence dit niveau de noir. Comme le représente la courbe V_{R}, le courant de cathode est régulé pendant les fenêtres EN à une valeur correspondant à la tension Vref.

Les premières lignes d'une trame, notamment les lignes 1, 2 et 3, ne sont pas visibles à l'écran. C'est pour cela que l'on effectue la régulation du niveau du noir et le préchauffage du tube lors de ces intervalles de ligne. Il est important d'inhiber la régulation du niveau du noir pendant la phase de préchauffage, car l'écart entre le courant de cathode présent et la valeur souhaitée entraînerait, lors des premières trames à la mise sous tension, des courants de correction I_{O} (I_{OR}, I_{OG}, I_{OB}) importants. Ces courants de correction importants entraîneraient des effets visuels désagréables.

La figure 3B représente l'allure réelle de la tension V_{R} aux bornes de la résistance Rs, ainsi que l'allure correspondante du signal de sortie Vc du comparateur 24. A chaque début et à chaque fin d'intervalle de ligne, la tension V_{R} présente un important pic positif. Ces pics, qui sont présents dans les fenêtres de mesure, sont susceptibles de dépasser la tension Vref. Comme cela est représenté, la tension Vc de sortie du comparateur 24 passe à un état haut, à l'intérieur des fenêtres de mesure, lors de chaque pic alors que la tension V_{R} moyenne n'a pas encore atteint la valeur Vref. Ainsi, si des précautions particulières ne sont pas prises, la bascule 26 est activée et les boucles de régulation du niveau du noir entrent en action trop tôt.

Le rôle du filtre passe-bas R2-C2 de la figure 2 est de pallier cet inconvénient. Toutefois, pour atténuer suffisamment les pics positifs, la capacité C2 doit être de grande valeur (de l'ordre de quelques microfarads). Aujourd'hui, on essaie d'intégrer la plupart des éléments des circuits de télévision. La capacité C2 ne peut être intégrée et il faut prévoir une broche spécifique 30 (figure 2) de circuit intégré pour connecter cette capacité. En outre, la capacité C2 en elle-même et son montage entraînent des coûts non négligeables.

Un objet de la présente invention est de prévoir un circuit de détection de tube chaud ne nécessitant pas de dispositif, notamment une capacité, d'atténuation de pic de tension.

La présente invention se base sur l'analyse détaillée ci-dessus d'un circuit de détection de tube chaud classique. La présente invention propose, pour détecter le fait que le courant de cathode atteint sa valeur du noir, d'utiliser des fenêtres de largeur inférieure à un intervalle de ligne et approximativement centrées dans les intervalles de ligne de manière que les pics de tension se produisent en dehors de ces fenêtres.

La présente invention vise plus particulièrement un procédé de détection de tube chaud de téléviseur comprenant les étapes suivantes lors d'une phase de préchauffage du tube fournir lors d'intervalles de ligne prédéterminés en début de trame des niveaux de préchauffage au tube ; et détecter le courant de cathode du tube lors de fenêtres coïncidant avec les intervalles de ligne prédéterminés pour activer des boucles de régulation du niveau du noir. Selon l'invention, les fenêtres sont de largeur inférieure à un intervalle de ligne et approximativement centrées sur les intervalles de ligne.

Les intervalles de ligne ont une durée de 52 microsecondes. Selon un mode de réalisation de la présente invention, les fenêtres ont une durée de 32 microsecondes et sont centrées sur les intervalles de ligne.

La présente invention prévoit aussi un circuit de détection de tube chaud de téléviseur, comprenant une bascule d'initialisation d'une boucle de régulation du courant de cathode du tube à un niveau de noir, un comparateur validé pendant des fenêtres relié à la bascule pour activer celle-ci lorsque le courant de cathode atteint le niveau de noir lors d'une phase de préchauffage où des niveaux de préchauffage sont fournis au tube pendant des intervalles de ligne prédéterminés. Selon l'invention, le circuit comprend des moyens pour générer, pendant lesdits intervalles de ligne, des fenêtres de validation du comparateur de durée inférieure à la durée des intervalles de ligne et approximativement centrées dans ces intervalles.

Selon un mode de réalisation de la présente invention, les moyens de génération de fenêtres comprennent une porte NON-OU-Exclusif recevant en entrée un signal de rapport cyclique 50% à la fréquence de succession des intervalles de ligne et un signal de rapport cyclique 50% à une fréquence double de ladite fréquence, ces signaux étant issus de diviseurs de fréquence inclus dans une boucle à verrouillage de phase de synchronisation desdits signaux sur un signal externe.

Ces objets, caractéristiques et avantages ainsi que d'autres de la présente invention, seront exposés en détail dans la description suivante de modes de réalisation particuliers, faite en relation avec les figures jointes parmi lesquelles :
la figure 1, précédemment décrite, représente un circuit de commande classique de cathode à boucle de régulation du niveau du noir ;
la figure 2 représente un circuit classique de détection du niveau du noir ;
les figures 3A et 3B représentent divers signaux des circuits précédents lors d'une phase de préchauffage du tube et lors d'une phase normale ;
la figure 4 représente un mode de réalisation de circuit de génération de fenêtre de mesure de largeur réduite selon la présente invention ; et
la figure 5 représente des signaux utilisés selon la présente invention pour générer avec le circuit de la figure 4 des fenêtres de mesure de largeur réduite.

Selon la présente invention, il est procédé pour valider les boucles de régulation du niveau du noir à une prise en compte de l'état de la sortie du comparateur 24 (figure 2) dans des fenêtres approximativement centrées sur les intervalles de ligne, mais de largeur inférieure à un intervalle de ligne. On évite ainsi la prise en compte d'états erronés de la sortie du comparateur 24 se produisant aux extrémités des intervalles de ligne.

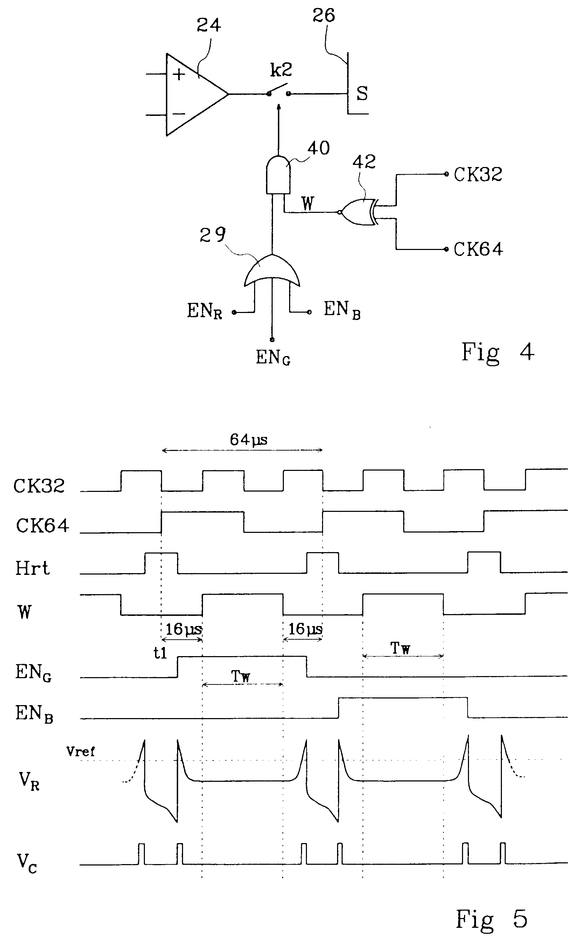

La figure 4 représente un circuit de commande de l'interrupteur K2 disposé entre le comparateur 24 et la bascule 26 de la figure 2. Selon l'invention, une porte ET 40 commande l'interrupteur K2 et reçoit sur une première entrée le signal W de sortie d'une porte NON-OU-Exclusif 42. Une première entrée de cette porte 42 reçoit un signal d'horloge CK64 de rapport cyclique 50% et de période 64 microsecondes (la période ligne). Une deuxième entrée de la porte 42 reçoit un signal d'horloge CK32 de rapport cyclique 50% et de période 32 microsecondes. Le signal CK64 est obtenu à partir du signal CK32 par un diviseur par 2. En outre, les signaux CK32 et CK64 sont synchronisés sur le signal de retour ligne Hrt.

Les circuits classiques de traitement de balayage horizontal, tels que celui fabriqué par la société SGS-Thomson sous la dénomination STV 2110, comprennent une boucle à verrouillage de phase pour synchroniser le signal de retour ligne Hrt sur un signal externe. Cette boucle à verrouillage de phase comprend un oscillateur commandé de 500 kHz suivi de plusieurs diviseurs par 2 dont deux successifs fournissent les signaux CK32 et CK64 souhaités. L'allure particulière du signal de retour ligne Hrt (impulsions de 12 microsecondes, espacées de 54 microsecondes) est obtenue de façon interne au circuit de traitement et les impulsions du signal Hrt s'avèrent être approximativement centrées sur les fronts montants du signal CK64.

Par ailleurs, la sortie de la porte OU 29 recevant les signaux de validation EN, est reliée à la deuxième entrée de la porte ET 40. Ainsi, les fenêtres périodiques W fournies par la porte 42 ne sont fournies à l'interrupteur K2 qu'aux moments nécessaires, c'est-à-dire lors des trois premières lignes d'une trame.

La figure 5 représente les allures des signaux CK32, CK64, Hrt et W en correspondance avec les signaux de validation EN_{G}, EN_{R}, la tension V_{R} aux bornes de la résistance Rs et le signal Vc de sortie du comparateur 24, dans la situation de la partie gauche (préchauffage) des figures 3A et 3B. A un instant t₁, il se produit un front montant du signal CK64 et un front descendant du signal CK32. Une impulsion du signal Hrt est centrée sur l'instant t₁. La sortie de la porte NON-OU-Exclusif 42 est à l'état haut lorsque les signaux CK32 et CK64 sont tous les deux à l'état haut ou tous les deux à l'état bas. Ceci se produit 16 microsecondes après un front montant du signal CK64 jusqu'à 16 microsecondes avant le prochain front montant du signal CK64. Les fronts montants du signal CK64 coïncident avec les centres des impulsions du signal Hrt. On obtient ainsi des fenêtres W de largeur Tw inférieure à un intervalle de ligne (intervalle entre un front descendant du signal Hrt et le front montant suivant), et approximativement centrées dans les intervalles de ligne. Dans ces conditions, comme le montre la figure 5, la sortie du comparateur 24 est validée (l'interrupteur K2 est fermé) pendant des intervalles Tw exempts d'états actifs erronés du comparateur.

De nombreuses variantes et modifications de la présente invention apparaîtront à l'homme du métier, notamment en ce qui concerne la génération des fenêtres W. Par exemple, ces fenêtres W peuvent être générées par deux circuits monostables disposés en série dont le premier est activé par une impulsion du signal de retour ligne. Si les impulsions du signal Hrt sont centrées sur les fronts descendants du signal CK64, on choisira une porte OU-Exclusif pour la porte 42.

## Revendications

1. Procédé de détection de tube chaud de téléviseur comprenant les étapes suivantes lors d'une phase de préchauffage du tube :
- fournir lors d'intervalles de ligne prédéterminés en début de trame des niveaux de préchauffage au tube ;
- détecter le courant de cathode du tube lors de fenêtres coïncidant avec les intervalles de ligne prédéterminés pour activer des boucles de régulation du niveau du noir ;
caractérisé en ce que lesdites fenêtres sont de largeur inférieure à un intervalle de ligne et approximativement centrées sur les intervalles de ligne.

2. Procédé selon la revendication 1, dans lequel les intervalles de ligne ont une durée de 52 microsecondes, caractérisé en ce que les fenêtres ont une durée de 32 microsecondes.

3. Circuit (18) de détection de tube chaud de téléviseur, comprenant une bascule (26) d'initialisation d'une boucle de régulation du courant de cathode du tube à un niveau de noir, un comparateur (24) validé pendant des fenêtres relié à la bascule pour activer celle-ci lorsque le courant de cathode atteint le niveau de noir lors d'une phase de préchauffage où des niveaux de préchauffage sont fournis au tube pendant des intervalles de ligne prédéterminés (1, 2, 3), caractérisé en ce qu'il comprend des moyens pour générer, pendant lesdits intervalles de ligne, des fenêtres (W) de validation du comparateur de durée (Tw) inférieure à la durée des intervalles de ligne et approximativement centrées dans ces intervalles.

4. Circuit de détection selon la revendication 3, caractérisé en ce que lesdits moyens de génération de fenêtres comprennent une porte NON-OU-Exclusif (42) recevant en entrée un signal (CK64) de rapport cyclique 50% à la fréquence de succession des intervalles de ligne et un signal (CK32) de rapport cyclique 50% à une fréquence double de ladite fréquence, ces signaux étant issus de diviseurs de fréquence inclus dans une boucle à verrouillage de phase de synchronisation desdits signaux sur un signal externe.

## Patentansprüche

1. Verfahren zur Überwachung bzw. zum Nachweis des Röhrenwarmlaufs eines Fernsehgeräts, wobei das Verfahren die folgenden Stufen im Verlauf einer Warmlaufphase der Röhre umfaßt:
- der Röhre werden während vorgegebener Zeilenperioden zu Beginn eines Einzel- bzw. Teilbilds Aufheiz- bzw. Aufwärmpegel zugeführt;
- während mit den vorgegebenen Zeilenintervallen koinzidierenden Fenstern wird der Kathodenstrom der Röhre überwacht bzw. nachgewiesen, zur Aktivierung der Schwarzwert-Regelschleifen;
dadurch gekennzeichnet, daß die genannten Fenster eine Breite kleiner als ein Zeilenintervall besitzen und annähernd in den Zeilenintervallen zentriert sind.

2. Verfahren nach Anspruch 1, bei welchem die Zeilenintervalle eine Dauer von 52 Mikrosekunden besitzen, dadurch gekennzeichnet, daß die Fenster eine Dauer von 32 Mikrosekunden haben.

3. Schaltung (18) zum Nachweis bzw. zur Überwachung des Röhren-Warmlaufs von Fernsehgeräten, umfassend eine Kippschaltung (26) zur Initialisierung einer Regelschleife zur Regelung des Kathodenstroms der Röhre auf einen Schwarzwert, einen während der Fenster aktivierten, mit der Kippschaltung verbundenen Komparator (24) zur Betätigung der Kippschaltung, sobald der Kathodenstrom den Schwarzwert während einer Warmlaufphase erreicht, in welcher der Röhre während vorgegebenen Zeilenintervallen (1, 2, 3) Aufwärmpegel zugeführt werden,
dadurch gekennzeichnet, daß die Schaltung Schaltmittel aufweist, um während der genannten Zeilenintervalle Aktivierungsfenster (W) für den Komparator zu erzeugen, deren Dauer (Tw) kleiner als die Dauer der Zeilenintervalle ist und die annähernd in diesen Intervallen zentriert sind.

4. Überwachungs- bzw. Nachweisschaltung nach Anspruch 3,
dadurch gekennzeichnet, daß die genannten Schaltmittel zur Erzeugung von Fenstern ein NEIN- exklusiv ODER-Gatter (42) aufweisen, das an seinem Eingang ein Signal (CK64) von Impulstastverhältnis 50 % und mit der Frequenz der Aufeinanderfolge der Zeilenintervalle zugeführt erhält sowie ein Signal (CK32) mit Impulstastverhältnis 50 % und einer Frequenz entsprechend dem Doppelten der genannten Zeilenfrequenz, wobei diese Signale aus Frequenzteilern gewonnen werden, die in einer Schleife mit Phasenverriegelung zur Synchronisierung der genannten Signale mit einem äußeren Signal enthalten sind.

## Claims

1. A method for detecting the warm up of a television cathode ray tube (CRT) including the following steps during a warm-up phase of the tube:
- providing the CRT with warm-up signals during predetermined line periods at the initial portion of frames;
- detecting the cathode current of the tube during the occurrence of windows in correspondence with said predetermined line periods in order to enable black level regulation loops;
wherein said windows have a width smaller than a line period and are approximately centered on the line periods.

2. The method of claim 1, wherein the line periods have a duration of 52 microseconds, and wherein the windows have a duration of 32 microseconds.

3. A circuit (18) for detecting the warm up of a television tube, including a flip-flop (26) for initializing a regulation loop of the cathode current of the tube at a black level, a comparator (24) enabled during the occurrence of windows and connected to said flip-flop (26) in order to enable said flip-flop when the cathode current reaches the black level during a warm-up phase while warm-up signals are provided to the tube during predetermined line periods (1, 2, 3), including means for generating, during said line periods, windows (W) operable for enabling the time comparator (T_{w}) and having a width smaller than the line periods, said windows being approximately centered on said line periods.

4. The detection circuit of claim 2, wherein said means for generating windows include an Exclusive-NOR gate (42) receiving at its input a signal (CK64) having a 50%-duty cycle at the line frequency and a signal (CK32) having a 50%-duty cycle at twice said line frequency, said signals being generated by frequency dividers included in a phase locked loop for synchronizing said signals with an external signal.
